# EUROPEAN PATENT APPLICATION

(11) **EP 2 312 369 A1**
(43) Date of publication of application: **20.04.2011**
(21) Application number: 10186337.1
(22) Date of filing: 04.10.2010
(51) Int. Cl.: G02B 21/00

(54) **Confocal optical scanner**

(30) Priority: 15.10.2009 JP 2009238523
(71) Applicant: Yokogawa Electric Corporation, Tokyo 180-8750 (JP)
(72) Inventor: Kei, Takayuki, Musashino-shi Tokyo 180-8750 (JP)
(74) Representative: Grünecker, Kinkeldey, Stockmair & Schwanhäusser Anwaltssozietät

(57) **Abstract**

There is provided a confocal optical scanner capable of coping with variation of optical system magnification, a bright field image, and so forth. The confocal optical scanner comprising a pinhole disc (21; 31) with pinholes (21a;31a) provided thereon, and rotation means for rotating the pinhole disc (21; 31) for obtaining a confocal image by rotating the pinhole disc (21; 31) with the use of the rotation means to thereby scan with illumination light and by causing optical feedback from the illumination light passing through the pinholes (21a; 31a) to form an image, wherein the confocal optical scanner is provided with a transfer mechanism for causing the pinhole disc (21; 31) to undergo reciprocating transfer between a position where the pinhole disc (21; 31) resides in an optical path of the illumination light, and a position where the pinhole disc (21; 31) is evacuated from the optical path of the illumination light.

## Description

### FIELD OF THE INVENTION

The present invention relates to a confocal optical scanner for obtaining a confocal image by rotating a pinhole disc to thereby scan with illumination light and by causing optical feedback from the illumination light passing through the pinholes to form an image.

### BACKGROUND OF THE INVENTION

There has been known a nipkow confocal scanner provided with multiple microlenses, two discs each having minute apertures of the same pattern and arranged in an array, rotation means for rotating two discs synchronously, a beam splitter inserted between two discs, an objective lens interposed between two discs and a sample. It is possible to obtain a confocal image of the sample by rotating two discs to thereby concurrently execute scanning with illumination light and selection of reflected light.

The following documents are exemplified as prior arts.
Patent Document: JP 2008-233543A
Patent Document: JP 2009-210889A

However, according to a conventional apparatus, the size of pinholes can't be changed and an objective lens magnification can't be optimized for an optical system. Further, there is a problem in the conventional apparatus that it does not comply with a request of observation of a bright field image such as a phase-contrast image as well as a confocal image of a sample.

### SUMMARY OF THE INVENTION

It is an object of the invention to provide a confocal optical scanner capable of coping with variation of optical system magnification, a bright field image, and so forth.

To achieve the above object, the confocal optical scanner comprising a pinhole disc with pinholes provided thereon, and rotation means for rotating the pinhole disc for obtaining a confocal image by rotating the pinhole disc with the use of the rotation means to thereby scan with illumination light and by causing optical feedback from the illumination light passing through the pinholes to form an image, wherein the confocal optical scanner is provided with a transfer mechanism for causing the pinhole disc to undergo reciprocating transfer between a position where the pinhole disc resides in an optical path of the illumination light, and a position where the pinhole disc is evacuated from the optical path.

According to the confocal optical scanner, the pinhole disc is caused to undergo reciprocating transfer between a position where the pinhole disc resides in an optical path of the illumination light, and a position where the pinhole disc where the pinhole disc is evacuated from the optical path, to thereby cause the confocal optical scanner to cope with variation of optical system magnification, observation of a bright field image, and so forth.

The confocal optical scanner may further comprise an optical system for acquiring an image observed through transmission illumination via the optical path when the pinhole disc is located at the position where the pinhole disc is evacuated from the optical path.

The confocal optical scanner may be provided with a plurality of the pinhole discs, and one of the pinhole discs is selectively located at the position where the pinhole disc resides in the optical path by the action of the transfer mechanism.

With the confocal optical scanner, the pinhole disc may be detachable.

The confocal optical scanner may further comprise a microlens disc provided with microlenses opposite to the pinholes of the pinhole disc, respectively, wherein the pinhole disc and the microlens disc are concurrently rotated by the rotation means.

The confocal optical scanner may further provided with means for bending an optical path of the optical feedback between the pinhole disc and the microlens disc.

According to the confocal optical scanner, the pinhole disc is caused to undergo reciprocating transfer between a position where the pinhole disc resides in an optical path of the illumination light, and a position where the pinhole disc is evacuated from the optical path, to thereby cause the confocal optical scanner to cope with variation of optical system magnification, a bright field image, and so forth.

### BRIEF DESCRIPTION OF THE DRAWINGS

Fig. 1 is a front view showing a confocal microscope constituting a confocal optical scanner according to a first embodiment of the invention;
Fig. 2 is a plan view showing the confocal microscope constituting the confocal optical scanner according to the first embodiment of the invention;
Fig. 3 is a front view showing a mode of the confocal microscope in the case where a bright field image is obtained;
Fig. 4 is a plan view showing the mode of the confocal microscope, as shown in Fig. 3;
Fig. 5 is a plan view showing a confocal microscope constituting a confocal optical scanner according to a second embodiment of the invention; and
Fig. 6 is also a plan view showing the confocal microscope constituting the confocal optical scanner according to the second embodiment of the invention.

### PREFERRED EMBODIMENT OF THE INVENTION

Embodiments of a confocal optical scanner according to the present invention are now described hereinafter.

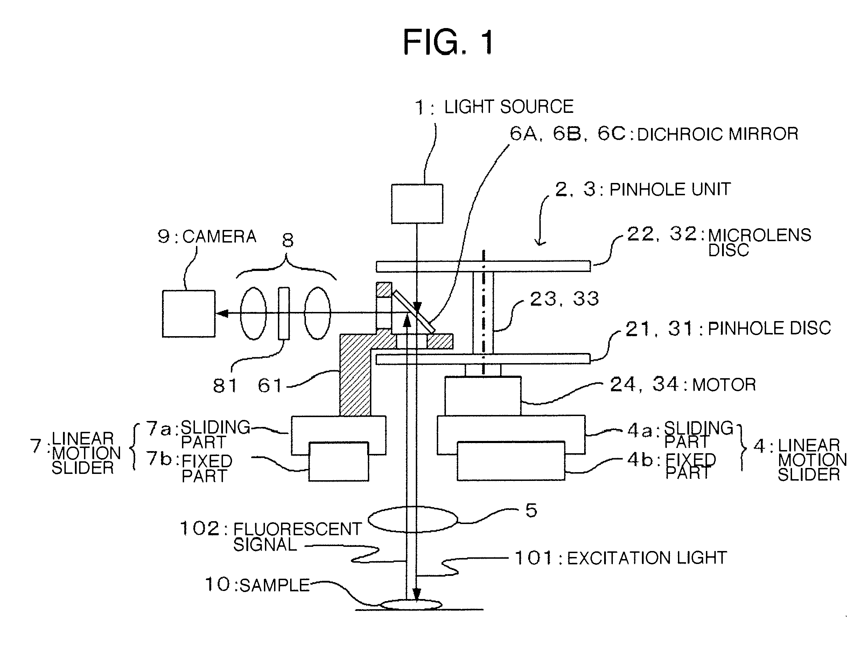

The confocal optical scanner according to a first embodiment of the invention is now described with reference to Figs. 1 to 4.

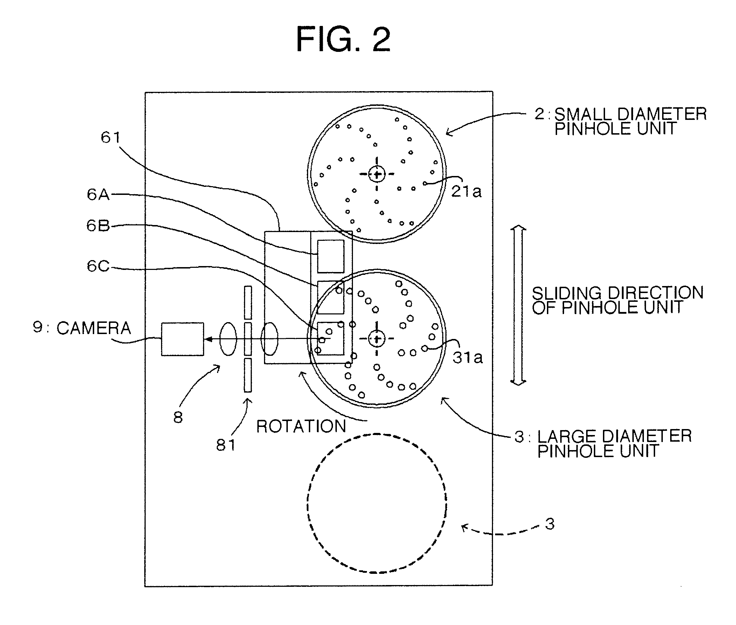

Fig. 1 is a front view showing a confocal microscope constituting a confocal optical scanner according to a first embodiment of the invention and Fig. 2 is a plan view showing the confocal microscope shown in Fig. 1.

As shown in Fig. 1 and Fig. 2, the confocal microscope is provided with a small diameter pinhole unit 2 and a large diameter pinhole unit 3.

The small diameter pinhole unit 2 comprises a pinhole disc 21 having pinholes 21a that are arranged thereon in a spiral pattern, a microlens disc 22 provided with microlenses 22a that are arranged thereon in the same pattern as the pinholes 21a, a coupling drum 23 for coupling the pinhole disc 21 and the microlens disc 22 and a motor 24 having a rotating shaft that is connected to the coupling drum 23.

The large diameter pinhole unit 3 comprises a pinhole disc 31 having pinholes 31a, that are arranged thereon in a spiral pattern, a microlens disc 32 provided with microlenses 32a that are arranged thereon in the same pattern as the pinholes 31a, a coupling drum 33 for coupling the pinhole disc 31 and the microlens disc 32 and a motor 34 having a rotating shaft that is connected to the coupling drum 33.

With the arrangement of the small diameter pinhole unit 2 and the large diameter pinhole unit 3, the microlenses of the microlens disc and the pinholes of the pinhole disc are opposed one on one, to thereby enhance utilization efficiency of excitation light.

As shown in Fig. 2, both the small diameter pinhole unit 2 and the large diameter pinhole unit 3 are fitted onto a sliding part 4a of a linear motion slider 4 and is slidable along a fixed part 4b of the linear motion slider 4. Sliding of the sliding part 4a may be executed manually or by a driving mechanism using an electric motor provided on the linear motion slider 4. When the sliding part 4a is caused to slide as described above, the small diameter pinhole unit 2 or the large diameter pinhole unit 3 is selectable, and the pinholes of the small diameter pinhole unit 2 or the large diameter pinhole unit 3 can be switched over in response to the magnification of the objective lens 5. By switching over the magnification of the objective lens 5 ranging from low magnification to high magnification, similar confocal image can be obtained.

As shown in Fig. 1 and Fig. 2, the confocal microscope is provided with three dichroic mirrors 6A, 6B, and 6C to cope with various fluorescent wavelengths from a sample 10. The dichroic mirrors 6A, 6B, 6C are designed to have characteristics for causing excitation light to be transmitted and causing a fluorescent signal to be reflected, and they are disposed between the pinhole disc and the microlens disc.

The dichroic mirrors 6A, 6B, 6C are fitted onto a sliding part 7a of a linear motion slider 7 via a mirror holder 61 and they are horizontally slidable along a fixed part 7b of the linear motion slider 7. Sliding of the sliding part 7a may be executed manually or by a driving mechanism using an electric motor provided on the linear motion slider 7.

The operation of the confocal microscope of the present embodiment will be next described.

The small diameter pinhole unit 2 or the large diameter pinhole unit 3 is selected by sliding the sliding part 4a up to a prescribed position and the selected diameter pinhole unit is inserted into an optical path. Further, any of the dichroic mirrors 6A, 6B and 6C is selected by sliding the sliding part 7a up to a prescribed position and the selected dichroic mirror is inserted into the optical path. Fig. 2 shows a state where the large diameter pinhole unit 3 and the dichroic mirrors 6C are selected.

In this state, as shown in Fig. 1 and 2, an excitation light 101 emitted from a light source 1 and having a specific wavelength falls on the large diameter pinhole unit 3 and is condensed by respective microlenses 32a of the microlens disc 32, then passes through the pinholes 31a of the pinhole disc 31 opposite to the respective microlenses 32a. The excitation light 101 is synchronized with the rotation of the large diameter pinhole unit 3 and scanned on the sample 10.

Fluorescent signal 102 having a wavelength longer than that of the excitation light 101 is emitted from the sample 10. The fluorescent signal 102 passes through the objective lens 5 to form an image on a pinhole area of the pinhole disc 31.

The fluorescent signal 102 having passed through the pinholes 31a of the pinhole disc 31 is bent by the dichroic mirror 6C and passes through an image formation optical system 8 to form an image on an imaging area of a camera 9, thereby forming a confocal image. Meanwhile, a bandpass filter 81 is provided between relay lenses of the image formation optical system 8 for causing only a wavelength band corresponding to the fluorescent signal to pass therethrough in order to improve S/N ratio of the image. The characteristics of the bandpass filter 81 may be selectable in response to the fluorescent signal, so that the characteristics of the bandpass filter 81 may be selected, for example, with use of a filter wheel.

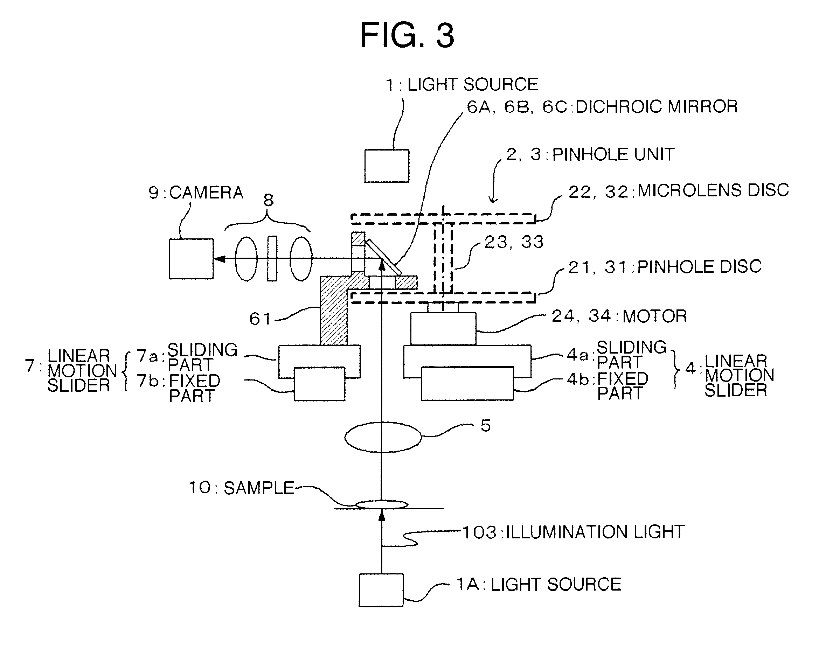

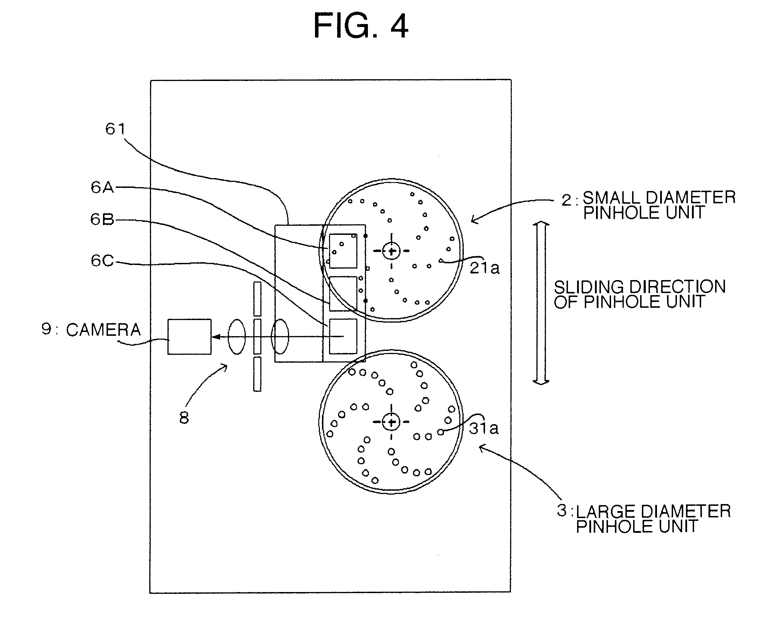

Fig. 3 is a front view showing a mode of the confocal microscope in the case where a bright field image is obtained and Fig. 4 is a plan view of the confocal microscope shown in Fig. 3.

As shown in Fig. 3 and Fig. 4, according to the confocal scanner of the first embodiment, both the small diameter pinhole unit 2 and the large diameter pinhole unit 3 can be evacuated from the optical path by sliding the sliding part 4a up to a prescribed position. That is, for the stopping position of the sliding part 4a, there are a position where the small diameter pinhole unit 2 is located at an optical path, a position where the large diameter pinhole unit 3 is located at the optical path, and a position where the small diameter pinhole unit 2 and the large diameter pinhole unit 3 are evacuated from the optical path.

As shown in Fig. 3 and Fig. 4, in a state where the small diameter pinhole unit 2 and the large diameter pinhole unit 3 are evacuated from the optical path, if illumination light 103 is irradiated from a light source 1A, light transmitted through a sample 10 sequentially passes through an objective lens 5, a dichroic mirror 6C, an image formation optical system 8, and falls in the camera 9. It is possible to obtain a bright field image such as a phase-contrast image and a minute interference image by the camera 9.

According to the confocal optical scanner unit of the present invention, since the pinhole unit can be evacuated from the optical path, it is possible to obtain a bright field image such as a phase-contrast image and a minute interference image as well as a confocal image.

Meanwhile, it may be configured that pinhole units each having pinholes of various diameters are prepared and the pinhole units are detachable relative to the sliding part 4a, thereby causing the diameters of the pinholes to be arbitrarily selected. In this case, a sliding range of the linear slider 7 may be determined so that the dichroic mirrors 6A, 6B, and 6C or the mirror holder 61 can be evacuated up to a position where they do not interfere with the detachable pinhole units.

### Second Embodiment

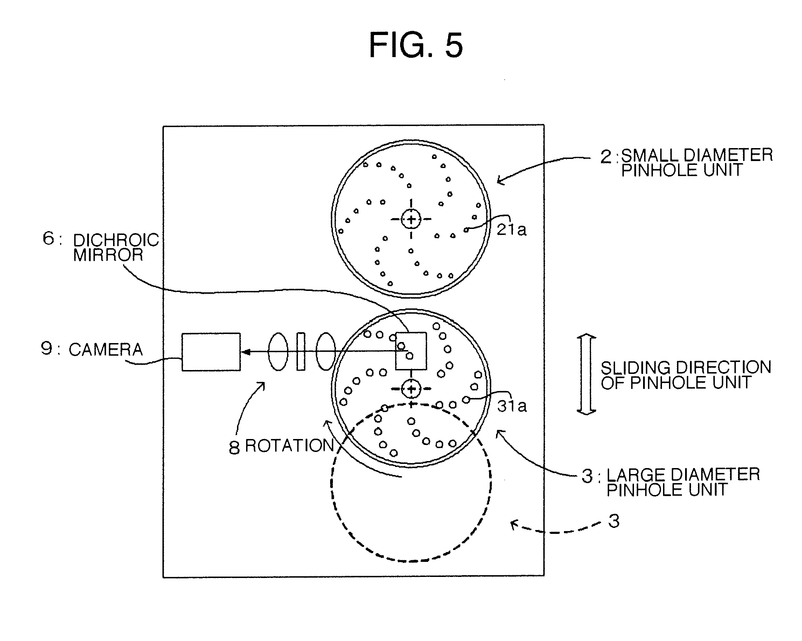

A confocal optical scanner according to a second embodiment is now described with reference to Fig. 5 to Fig. 6.

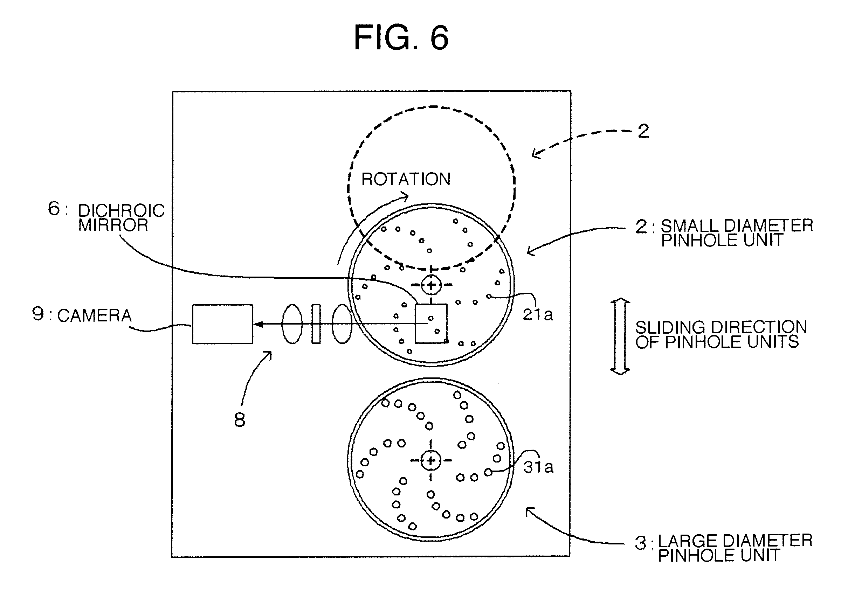

Fig. 5 and Fig. 6 are plan views respectively showing a confocal microscope constituting a confocal optical scanner according to the second embodiment of the invention. In Fig. 5 and Fig. 6, elements same as those of the confocal optical scanner according to the first embodiment are denoted by the same reference numerals.

As shown in Fig. 5, according to the confocal optical scanner of the second embodiment, a single dichroic mirror 6 is disposed between a microlens disc and a pinhole disc. A small diameter pinhole unit 2 or a large diameter pinhole unit 3 can be selectively located at an optical path in response to magnification of an objective lens by sliding the small diameter pinhole unit 2 or the large diameter pinhole unit 3. Fig. 5 shows a state where the large diameter pinhole unit 3 is located on the optical path while Fig. 6 shows the state where the small diameter pinhole unit 2 is located at the optical path.

According to the confocal optical scanner of the second embodiment, it is impossible to obtain a bright field image by evacuating the small diameter pinhole unit 2 and the large diameter pinhole unit 3 from the optical path, it is possible to miniaturize the confocal optical scanner by reducing a transfer stroke while the small diameter pinhole unit 2 and the large diameter pinhole unit 3 are caused to approach each other.

The scope of application of the present invention is not limited to the foregoing embodiments. The present invention can be widely applied to a confocal optical scanner comprising a pinhole disc with pinholes provided thereon, and rotation means for rotating the pinhole disc for obtaining a confocal image by rotating the pinhole disc with the use of the rotation means to thereby scan with illumination light and by causing optical feedback from the illumination light passing through the pinholes to form an image.

## Claims

1. A confocal optical scanner comprising:
a pinhole disc (21; 31) with pinholes (21a; 31a) provided thereon; and
rotation means for rotating the pinhole disc (21; 31) for obtaining a confocal image by rotating the pinhole disc (21; 31) with the use of the rotation means to thereby scan with illumination light and by causing optical feedback from the illumination light passing through the pinholes (21a; 31a) to form an image;
wherein the confocal optical scanner is provided with a transfer mechanism (4) for causing the pinhole disc (21; 31) to undergo reciprocating transfer between a position where the pinhole disc (21; 31) resides in an optical path of the illumination light, and a position where the pinhole disc (21; 31) is evacuated from the optical path of the illumination light.

2. The confocal optical scanner according to claim 1, further comprising an optical system (8) for acquiring an image observed through transmission illumination via the optical path when the pinhole disc (21; 31) is located at the position where the pinhole disc (21; 31) is evacuated from the optical path.

3. The confocal optical scanner according to claim 1 or 2, wherein a plurality of the pinhole discs (21 and 31) are provided, and one of the pinhole discs (21 or 31) is selectively located at the position where the pinhole disc (21 or 31) resides in the optical path by the action of the transfer mechanism.

4. The confocal optical scanner according to any one of claims 1 to 3, wherein the pinhole disc (21; 31) is detachable.

5. The confocal optical scanner according to any one of claims 1 to 4, further comprising a microlens disc (22, 32) provided with microlenses opposite to the pinholes (21a; 31a) of the pinhole disc (21; 31), respectively, wherein the pinhole disc (21; 31) and the microlens disc (22, 32) are concurrently rotated by the rotation means.

6. The confocal optical scanner according to claim 5, wherein means for bending an optical path of the optical feedback is provided between the pinhole disc (21; 31) and the microlens disc (22, 32).
